# EUROPÄISCHE PATENTSCHRIFT

(11) **EP 0 463 995 B1**
(45) Veröffentlichungstag und Bekanntmachung des Hinweises auf die Patenterteilung: **21.02.1996**
(21) Anmeldenummer: 91810467.0
(22) Anmeldetag: 18.06.1991
(51) Int. Cl.: C09B 29/42, D06P 3/54

(54) **Azofarbstoffe mit 2-Alkylamino-3-cyan-4,6-diaminopyridinen als Kupplungskomponenten**
Azo dyestuffs with 2-alkylamino-3-cyano-4,6-diaminopyridines as coupling components
Colorants azoiques avec des 2-alkylamino 3-cyano-4,6-diaminopyridines comme copulants

(30) Priorität: 27.06.1990 CH 2134/90
(43) Veröffentlichungstag der Anmeldung: 02.01.1992
(73) Patentinhaber: CIBA-GEIGY AG, CH-4002 Basel (CH)
(72) Erfinder: Ramanathan, Visvanathan, Dr., CH-4056 Basel (CH); Della Casa, Angelo, CH-4125 Riehen (CH)

(56) Entgegenhaltungen:
- CH-A- 606 297
- FR-A- 2 427 362
- US-A- 4 208 324

## Beschreibung

Gegenstand der vorliegenden Erfindung sind Dispersionsfarbstoffe, Verfahren zu deren Herstellung sowie ihre Verwendung zum Färben von Textilmaterialien.

Die erfindungsgemässen Farbstoffe entsprechen der Formel 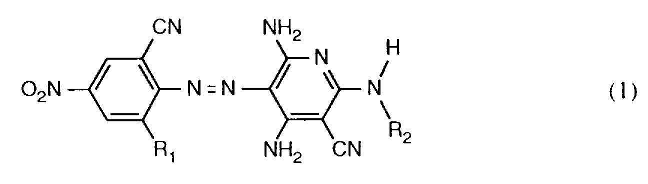 worin
R₁ Halogen oder CF₃ und
R₂ substituiertes Alkyl oder Alkyl, welches substituiert ist durch Hydroxy, Alkoxy, Phenoxy, Halogen, Cyan oder Phenyl bedeuten, wobei die Alkyl- und Phenylgruppen in diesen Substituenten unsubstituiert oder substituiert durch Hydroxy, Alkoxy oder Phenoxy sind.

Unter Halogen ist generell Fluor, Brom, Jod oder vor allem Chlor zu verstehen.

Unter Alkylresten sind erfindungsgemäss generell geradkettige, verzweigte oder cyclische Alkylgruppe zu verstehen. Es handelt sich z.B. um Methyl, Ethyl, Propyl, i-Propyl, Butyl, i-Butyl, tert.-Butyl, Amyl, tert.-Amyl(1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, Cyclopentyl, Cyclohexyl, Methylcyclohexyl sowie die dazugehörenden Isomeren. Die Alkylreste enthalten vorzugsweise 1 bis 8 C-Atome, vor allem 3 bis 8 C-Atome.

Diese Alkylreste können substituiert sein, z.B. durch Hydroxy, Alkoxy, Phenoxy, Halogen, Cyan oder Phenyl, wobei die Alkyl- und Phenylgruppen in diesen Substituenten ebenfalls substituiert sein können, z.B. durch Hydroxy, Alkoxy oder Phenoxy. Beispiele für substituierte Alkylgruppen sind Methoxyethyl, Ethoxyethyl, Methoxypropyl, Ethoxypropyl, Butoxypropyl, 2-Ethylhexoxypropyl, Hydroxyethoxyethyl, Hydroxyethoxypropyl, Methoxyethoxyethyl, Methoxyethoxypropyl, Butoxyethoxyethyl, Butoxyethoxypropyl, Phenoxyethoxyethyl, Phenoxyethoxypropyl, Chlorethoxyethyl, Cyanethoxypropyl, Benzyl oder Phenethyl.

Vorzugsweise bedeutet R₂ unsubstituiertes C₁-C₈-Alkyl oder einen Rest der Formel

-R₃-O-R₄-X (2)

worin
- R₃: C₂-C₄-Alkylen,
- R₄: C₂-C₈-Alkylen und
- X: H, -OH, -O-Phenyl oder -O-C₁-C₈-Alkyl bedeutet.
R₁ ist vorzugsweise Chlor oder CF₃.

In besonders bevorzugten erfindungsgemässen Farbstoffen der Formel (1) bedeutet R₁ Chlor oder CF₃ und R₂ unsubstituiertes C₁-C₈-Alkyl oder einen Rest der Formel (2), worin R₃, R₄ und X die unter der Formel (2) angegebenen Bedeutungen aufweisen.

Unter diesen sind solche besonders bevorzugt, bei denen R₁ Chlor und R₂ einen Rest der Formel

-R₃-O-R₄-X (2)

bedeutet, worin
R₃ und R₄ unabhängig voneinander je Ethylen oder 1,3-Propylen und X Methoxy, Ethoxy oder Phenoxy bedeutet.

Die erfindungsgemässen Farbstoffe werden auf an sich bekannte Art und Weise hergestellt, beispielsweise indem man ein Amin der Formel 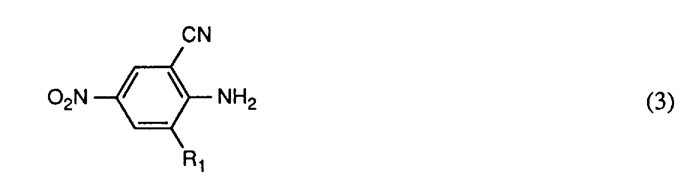 diazotiert und mit einer Kupplungskomponente der Formel 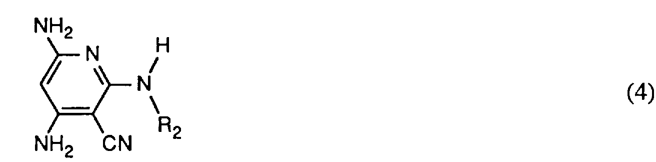 kuppelt, wobei R₁ und R₂ die unter der Formel (1) angegebenen Bedeutungen aufweisen.

Die Verbindungen der Formel (3) und (4) sind bekannt oder können auf an sich bekannte Art hergestellt werden und die Diazotierung und Kupplung erfolgen auf übliche Weise.

Man kann auch eine Verbindung der Formel (3), welche statt Cyano (-CN) Halogen enthält, diazotieren und mit einer Kupplungskomponente der Formel (4) kuppeln und anschliessend auf übliche Weise Halogen gegen Cyano austauschen.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4′-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2½-acetat färbt man vorzugsweise zwischen ungefähr 65 bis 85°C und Cellulosetriacetat bei Temperaturen bis zu 115°C.

Die neuen Farbstoffe färben im Färbebad gleichseitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosol-Verfahren, im Ausziehverfahren und für Druckverfahren.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale rotorange oder rote Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die sehr gute Lichtechtheit der erhaltenen Färbungen bei hoher Brillanz.

Die erfindungsgemässen Farbstoffe können auch gut verwendet werden zur Herstellung von Mischnuancen zusammen mit anderen Farbstoffen oder zusammen mit einem geeigneten gelben und blauen Farbstoff für das Trichromie-Färben. Selbstverständlich können auch Mischungen der erfindungsgemässen Farbstoffe untereinander verwendet werden.

Wegen der sehr guten Lichtechtheit auch bei erhöhten Temperaturen sind die erfindungsgemässen Farbstoffe hervorragend geeignet für das Färben von Polyester-Textilmaterial für Autopolsterbezüge.

Die vorstehend genannten Verwendungen der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können Sowie bevorzugte Verfahrensbedingungen sind vorstehend hei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textimaterial.

Aus der US-A-4,208,324 sind strukturell ähnliche Azofarbstoffe bekannt, welche aus spezifisch substituierten 3-Cyano-4,6-diaminopyridinen und diazotierten spezifisch substituierten 2-Cyano-4-nitroanilinen hergestellt werden.

Die FR-A-2 427 362 beschreibt Azofarbstoffe, welche sich durch einen fehlenden Cyanosubstituenten in der Diazokomponente von den erfindungsgemässen Farbstoffen unterscheiden.

Die folgenden Beispiele veranschaulichen die Erfindung weiter, ohne sie darauf zu beschränken. Teile und Prozente beziehen sich, sofern nicht anders angegeben, auf das Gewicht.

### Beispiel 1:

A) 10,65 Teile 2-Brom-3-cyan-4,6-diaminopyridin, 28 Teile Ethanol und 20 Teile 3-(2-Methoxyethoxy)-propylamin werden während 24 Stunden in einem Autoklaven auf 110°C erhitzt. Die Reaktionslösung, welche die Verbindung der Formel 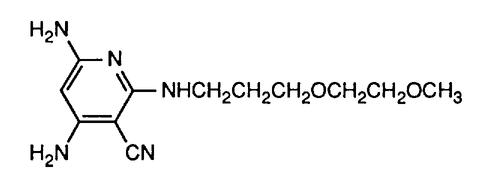 enthält, wird für die Kupplung verwendet.

B) 7,5 Teile Natriumnitrit werden in 140 Teilen Schwefelsäure bei 5-10°C gelöst. Dann trägt man 19,7 Teile 2-Chlor-6-cyan-4-nitroanilin ein und rührt während 2 Stunden bei 10-15°C. Die Lösung wird in 600 Teile Eiswasser gegossen. Ueberschüssige salpetrige Säure wird mit Amidosulfonsäure beseitigt. Die so erhaltene Diazolösung wird zu einer Lösung von 26,5 Teilen 2-Methoxyethoxypropylamino-3-cyan-4,6-diaminoypridin in 158 Teile Ethanol gegeben. Nach beendeter Kupplung wird der Farbstoff der Formel 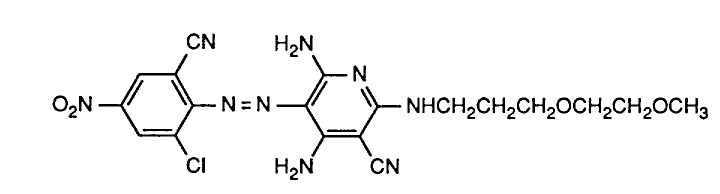 abfiltriert, mit Wasser gewaschen und getrocknet. Er färbt Polyesterfasern in brillanten roten Tönen von hervorragenden Echtheiten, insbesondere sehr guter Lichtechtheit.

### Beispiel 2:

7,5 Teile Natriumnitrit werden in 140 Teilen Schwefelsäure bei 5-10°C gelöst. In die erhaltene Lösung trägt man 28,5 Teile 2-Brom-4-nitro-6-trifluormethylanilin ein und rührt während 2 Stunden bei 10-15°C. Die Lösung wird in 600 Teile Eiswasser gegossen und die überschüssige salpetrige Säure mit Amidosulfonsäure beseitigt. Die so erhaltene Diazolösung wird zu einer Lösung von 32,7 Teilen 2-Phenoxyethoxypropylamino-3-cyan-4,6-diaminopyridin in 240 Teilen Ethanol gegeben. Nach beendeter Kupplung wird der Farbstoff abfiltriert, mit Wasser gewaschen und getrocknet.

31,5 Teile des erhaltenen Bromfarbstoffes werden in 100 Teilen Pyridin mit 5,8 Teilen Kupfer-I-cyanid versetzt und 5 Stunden bei 100°C gerührt. Nach Abkühlung wird der Farbstoff mit Wasser ausgefällt, abgesaugt und mit verdünnter Salzsäure und Wasser gewaschen. Man erhält den Farbstoff der Formel 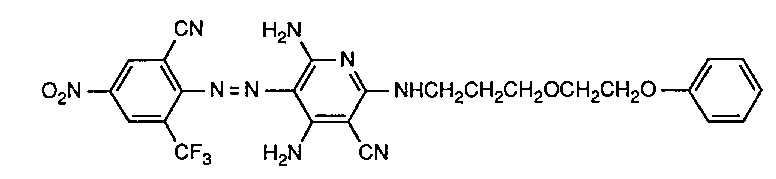 Er färbt Polyesterfasern in brillanten roten Tönen von vorzüglichen Echtheiten.

### Beispiele 3-32:

Auf analoge Weise wie in den Beispielen 1 und 2 beschrieben erhält man die in der folgenden Tabelle aufgeführten Farbstoffe. Sie färben Polyesterfasern in den in der letzten Spalte angegebenen Farbtönen.

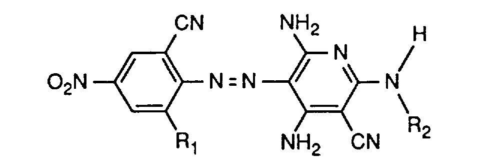

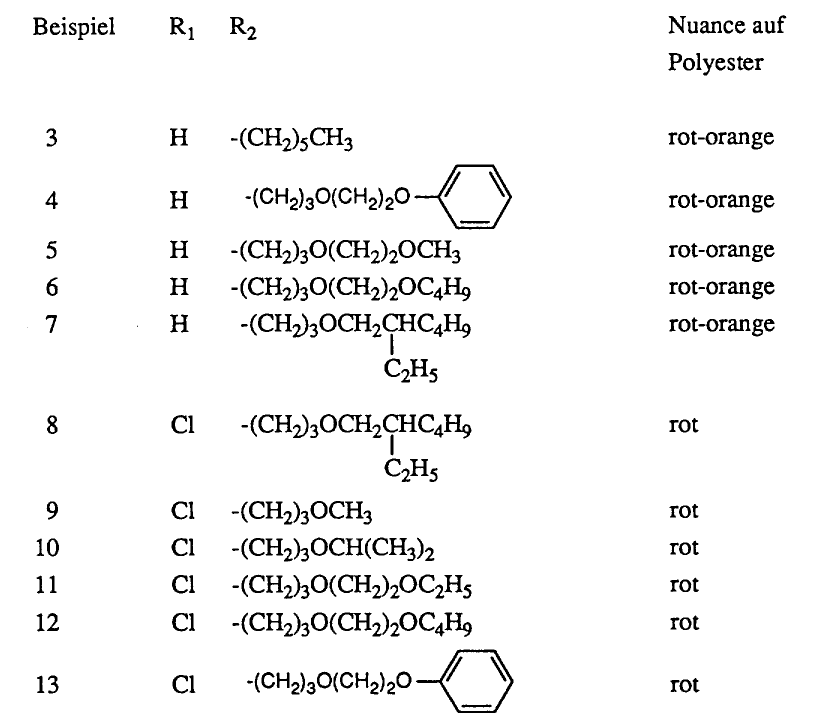

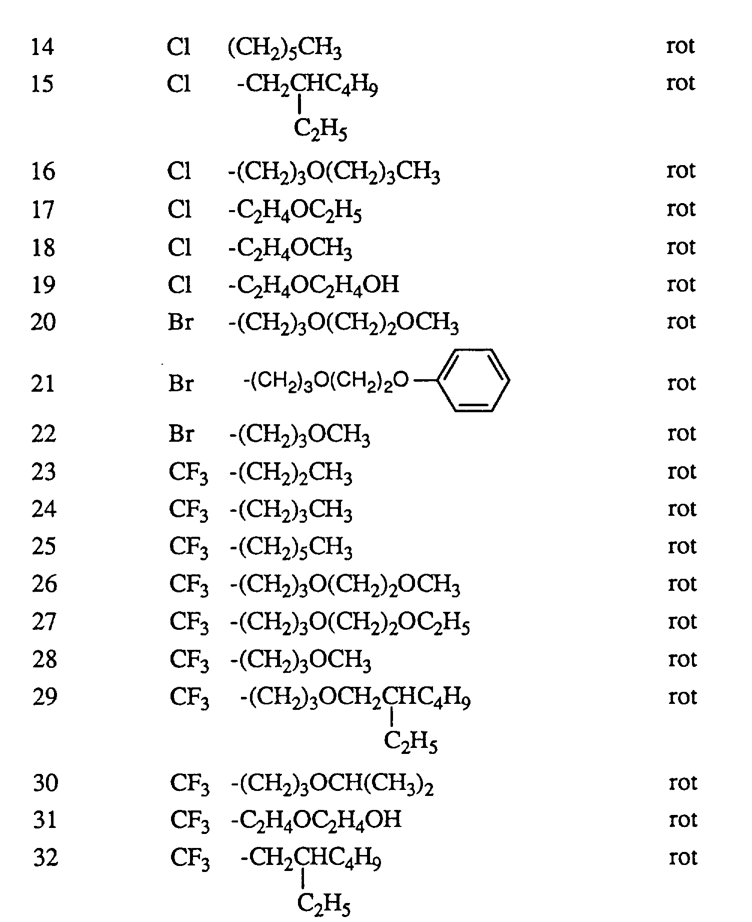

### Beispiel 33:

1 g des im Beispiel 1 beschriebenen Farbstoffs wird zusammen mit 17 g Wasser und 2 g eines handelsüblichen Dispergators vom Typ Dinaphthylmethandisulfonat in einer Sandmühle gemahlen und in eine 5%ige wässrige Dispersion überführt.

Mit dieser Formulierung wird im HT-Ausziehverfahren bei 130°C eine 1%ige Färbung (bezogen auf Pigment und Substrat) auf Polyestergewebe erstellt und reduktiv gereinigt. Die so erzielte rote Färbung weist sehr gute Gebrauchsechtheiten und insbesondere eine ausgezeichnete Lichtechtheit auf.

## Patentansprüche (Patentansprüche für folgende(n) Vertragsstaat(en): BE, CH, DE, FR, GB, IT, LI, SE)

1. Farbstoffe der Formel 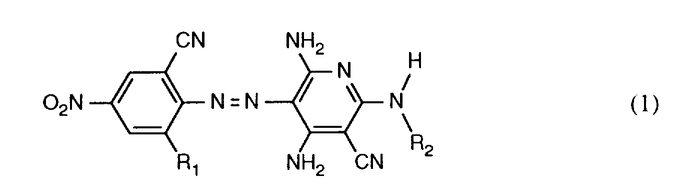 worin
R₁ Halogen oder CF₃ ist und
R₂ unsubstituiertes Alkyl oder Alkyl welches substituiert ist durch Hydroxy, Alkoxy, Phenoxy, Halogen, Cyan oder Phenyl bedeutet, wobei die Alkyl- und Phenylgruppen in diesen Substituenten unsubstituiert oder substituiert durch Hydroxy, Alkoxy oder Phenoxy sind.

2. Farbstoffe gemäss Anspruch 1, worin R₁ Chlor oder CF₃ bedeutet.

3. Farbstoffe gemäss einem der Ansprüche 1 und 2, worin R₂ unsubstituiertes C₁-C₈-Alkyl oder einen Rest der Formel
-R₃-O-R₄-X (2)
bedeutet, worin
R₃ C₂-C₄-Alkylen,
R₄ C₂-C₈-Alkylen und
X H, -OH, -O-Phenyl oder -O-C₁-C₈-Alkyl bedeutet.

4. Farbstoffe gemäss Ansprüchen 2 und 3, worin R₁ Chlor oder CF₃ bedeutet und R₂ unsubstituiertes C₁-C₈-Alkyl oder einen Rest der Formel (2), worin R₃, R₄ und X die unter der Formel (2) angegebenene Bedeulungen aufweisen.

5. Farbstoffe gemäss Anspruch 4, worin
R₁ Chlor und R₂ einen Rest der Formel
-R₃-O-R₄-X (2)
bedeutet, worin
R₃ und R₄ unabhängig voneinander je Ethylen oder 1,3-Propylen und X Methoxy, Ethoxy oder Phenoxy bedeutet.

6. Verfahren zur Herstellung von Farbstoffen der Formel (1) gemäss Anspruch 1, dadurch gekennzeichnet, dass man ein Amin der Formel 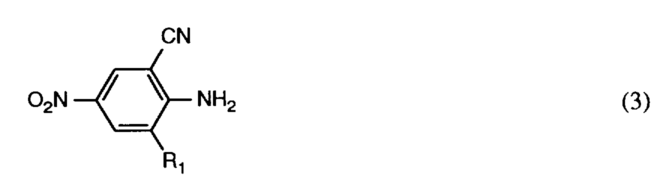 diazotiert und mit einer Kupplungskomponente der Formel 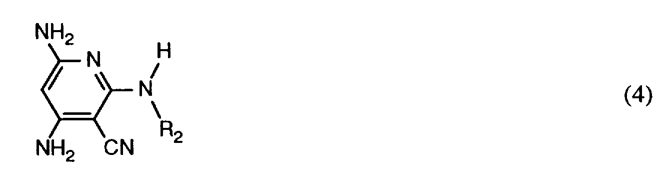 kuppelt, wobei R₁ und R₂ die unter der Formel (1) angegebenen Bedeutungen aufweisen.

7. Verwendung der Dispersionsfarbstoffe gemäss Anspruch 1 zum Färben oder Bedrucken von halbsynthetischem oder synthetischem hydrophobem Fasermaterial, insbesondere Textilmaterial.

8. Verwendung nach Anspruch 7 zum Färben oder Bedrucken von Textilmaterial aus Polyesterfasern.

9. Verfahren zum Färben oder Bedrucken von halbsynthetischem oder synthetischem hydrophobem Fasermaterial, insbesondere Textilmaterial, dadurch gekennzeichnet, dass man eine oder mehrere der im Anspruch 1 definierten Verbindungen auf das genannte Material aufbringt oder diesem einverleibt.

10. Verfahren nach Anspruch 9, worin das hydrophobe Fasermaterial, vorzugsweise Textilmaterial, aus Polyesterfasern besteht.

11. Das gemäss Anspruch 9 oder 10 gefärbte oder bedruckte Material.

## Patentansprüche (Patentansprüche für folgende(n) Vertragsstaat(en): ES)

1. Verfahren zur Herstellung von Farbstoffen der Formel 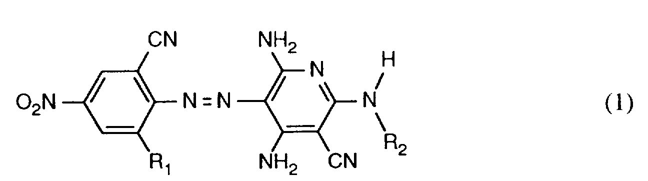 worin
R₁ Halogen oder CF₃ ist und
R₂ unsubstituiertes Alkyl oder Alkyl, welches substituiert ist durch Hydroxy, Alkoxy, Phenoxy, Halogen, Cyan oder Phenyl bedeutet, wobei die Alkyl- und Phenylgruppen in diesen Substituenten unsubstituiert oder substituiert durch Hydroxy, Alkoxy oder Phenoxy sind, dadurch gekennzeichnet, dass man ein Amin der Formel 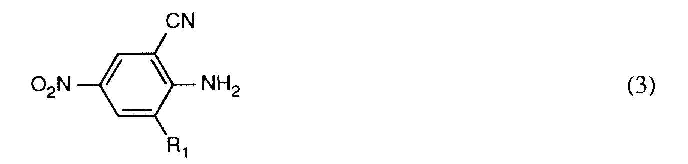 diazotiert und mit einer Kupplungskomponente der Formel 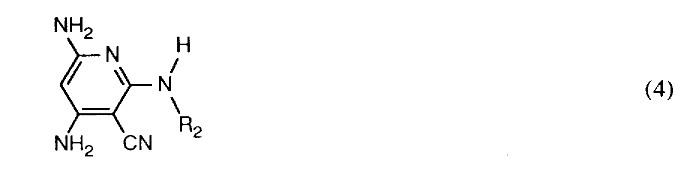 kuppelt, wobei R₁ und R₂ die unter der Formel (1) angegebenen Bedeutungen aufweisen.

2. Verfahren gemäss Anspruch 1, worin R₁ Chlor oder CF₃ bedeutet.

3. Verfahren gemäss einem der Ansprüche 1 und 2, worin R₂ unsubstituiertes C₁-C₈-Alkyl oder einen Rest der Formel
-R₃-O-R₄-X (2)
bedeutet, worin
R₃ C₂-C₄-Alkylen,
R₄ C₂-C₅-Alkylen und
X H, -OH, -O-Phenyl oder -O-C₁-C₈-Alkyl bedeutet.

4. Verfahren gemäss Ansprüchen 2 und 3, worin R₁ Chlor oder CF₃ bedeutet und R₂ unsubstituiertes C₁-C₈-Alkyl oder einen Rest der Formel (2), worin R₃, R₄ und X die unter der Formel (2) angegebenene Bedeutungen aufweisen.

5. Verfahren gemäss Anspruch 4, worin
R₁ Chlor und R₂ einen Rest der Formel
-R₃-O-R₄-X (2)
bedeutet, worin
R₃ und R₄ unabhängig voneinander je Ethylen oder 1,3-Propylen und X Methoxy, Ethoxy oder Phenoxy bedeutet.

6. Verwendung der gemäss Anspruch 1 hergestellten Dispersionsfarbstoffe zum Färben oder Bedrucken von halbsynthetischem oder synthetischem hydrophobem Fasermaterial, insbesondere Textilmaterial.

7. Verwendung nach Anspruch 6 zum Färben oder Bedrucken von Textilmaterial aus Polyesterfasern.

8. Verfahren zum Färben oder Bedrucken von halbsynthetischem oder synthetischem hydrophobem Fasermaterial, insbesondere Textilmaterial, dadurch gekennzeichnet, dass man eine oder mehrere der im Anspruch 1 unter der Formel (1) definierten Verbindungen auf das genannte Material aufbringt oder diesem einverleibt.

9. Verfahren nach Anspruch 8, worin das hydrophobe Fasermaterial, vorzugsweise Textilmaterial, aus Polyesterfasern besteht.

10. Das gemäss Anspruch 8 oder 9 gefärbte oder bedruckte Material.

## Claims (Claims for the following Contracting State(s): BE, CH, DE, FR, GB, IT, LI, SE)

1. A dye of the formula 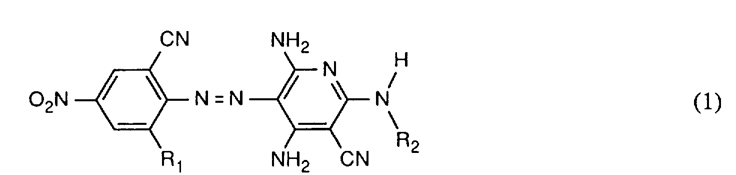 in which R₁ is halogen or CF₃ and R₂ is unsubstituted alkyl or alkyl which is substituted by hydroxyl, alkoxy, phenoxy, halogen, cyano or phenyl, where the alkyl and phenyl groups in these substituents are unsubstituted or substituted by hydroxyl, alkoxy or phenoxy.

2. A dye according to claim 1, in which R₁ is chlorine or CF₃.

3. A dye according to either of claims 1 and 2, in which R₂ is unsubstituted C₁-C₈alkyl or a radical of the formula
-R₃-O-R₄-X (2)
in which R₃ is C₂-C₄alkylene, R₄ is C₂-C₈alkylene and X is H, -OH, -O-phenyl or -O-C₁-C₈alkyl.

4. A dye according to claims 2 and 3, in which R₁ is chlorine or CF₃ and R₂ is unsubstituted C₁-C₈alkyl or a radical of the formula (2) in which R₃, R₄ and X are as defined under formula (2).

5. A dye according to claim 4, in which R₁ is chlorine and R₂ is a radical of the formula
-R₃-O-R₄-X (2)
in which R₃ and R₄, independently of one another, are each ethylene or 1,3-propylene and X is methoxy, ethoxy or phenoxy.

6. A process for the preparation of dyes of the formula (1) according to claim 1, which comprises diazotising an amine of the formula 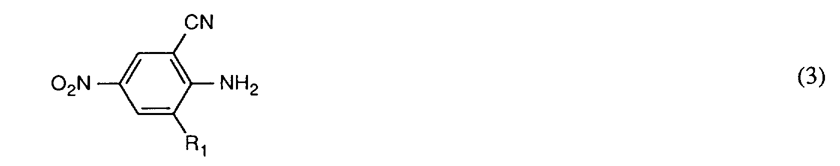 and coupling the product with a coupling component of the formula 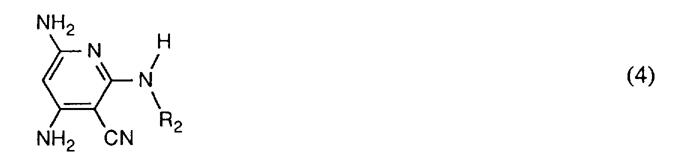 in which R₁ and R₂ are as defined under formula (1).

7. Use of a disperse dye according to claim 1 for the dyeing or printing of semisynthetic or synthetic hydrophobic fibre material, in particular textile material.

8. Use according to claim 7 for the dyeing or printing of textile material comprising polyester fibres.

9. A process for the dyeing or printing of semisynthetic or synthetic hydrophobic fibre material, in particular textile material, wherein one or more of the compounds defined in claim 1 are applied to the said material or incorporated therein.

10. A process according to claim 9, in which the hydrophobic fibre material, preferably textile material, is made of polyester fibres.

11. A material dyed or printed according to claim 9 or 10.

## Claims (Claims for the following Contracting State(s): ES)

1. A process for preparing a dye of the formula 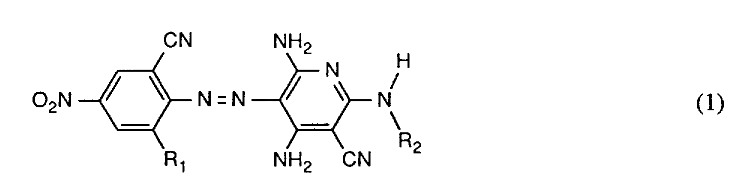 in which R₁ is halogen or CF₃ and R₂ is unsubstituted alkyl or alkyl which is substituted by hydroxyl, alkoxy, phenoxy, halogen, cyano or phenyl, where the alkyl and phenyl groups in these substituents are unsubstituted or substituted by hydroxyl, alkoxy or phenoxy which comprises diazotizing an amine of the formula 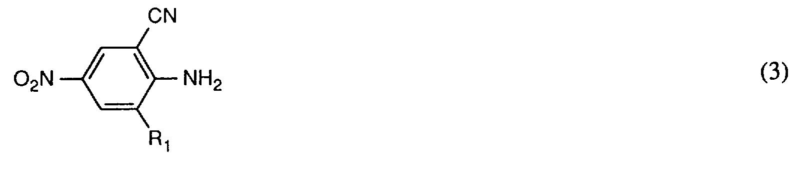 and coupling the product with a coupling component of the formula 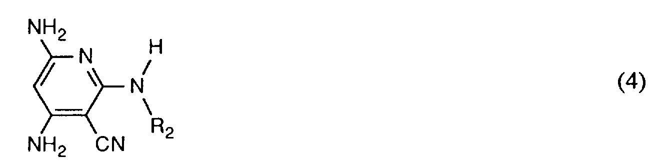 in which R₁ and R₂ are as defined under formula (1).

2. A process according to claim 1, in which R₁ is chlorine or CF₃.

3. A process according to either of claims 1 and 2, in which R₂ is unsubstituted C₁-C₈alkyl or a radical of the formula
-R₃-O-R₄-X (2)
in which R₃ is C₂-C₄alkylene, R₄ is C₂-C₈alkylene and X is H, -OH, -O-phenyl or -O-C₁-C₈alkyl.

4. A process according to claims 2 and 3, in which R₁ is chlorine or CF₃ and R₂ is unsubstituted C₁-C₈alkyl or a radical of the formula (2) in which R₃, R₄ and X are as defined under formula (2).

5. A process according to claim 4, in which R₁ is chlorine and R₂ is a radical of the formula
-R₃-O-R₄-X (2)
in which R₃ and R₄, independently of one another, are each ethylene or 1,3-propylene and X is methoxy, ethoxy or phenoxy.

6. Use of a disperse dye prepared according to claim 1 for the dyeing or printing of semisynthetic or synthetic hydrophobic fibre material, in particular textile material.

7. Use according to claim 6 for the dyeing or printing of textile material comprising polyester fibres.

8. A process for the dyeing or printing of semisynthetic or synthetic hydrophobic fibre material, in particular textile material, wherein one or more of the compounds defined in claim 1 under the formula (1) are applied to the said material or incorporated therein.

9. A process according to claim 8, in which the hydrophobic fibre material, preferably textile material, is made of polyester fibres.

10. A material dyed or printed according to claim 8 or 9.

## Revendications (Revendications pour l'(les) Etat(s) contractant(s) suivant(s): BE, CH, DE, FR, GB, IT, LI, SE)

1. Colorants de formule 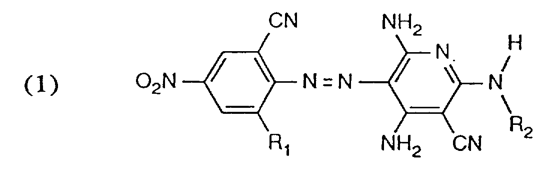 dans laquelle
R₁ représente un atome d'halogène ou un groupe CF₃ et
R₂ représente un groupe alkyle non substitué ou substitué par un groupe hydroxy, alcoxy, phénoxy, un atome d'halogène, un groupe cyano ou phényle, les groupes alkyle et phényle de ces substituants pouvant être non substitués ou porter des substituants hydroxy, alcoxy ou phénoxy.

2. Colorants conformes à la revendication 1 où R₁ représente un atome de chlore ou un groupe CF₃.

3. Colorants conformes à une des revendications 1 et 2, dans lesquels R₂ représente un groupe alkyle en C₁₋₈ non substitué ou un résidu de formule
(2) -R₃-O-R₄-X
dans laquelle
R₃ représente un groupe alkyléne en C₂₋₄,
R₄ représente un groupe alkylène en C₂₋₈ et
X représente H, -OH, -O-phényle ou -O-(alkyle en C₁₋₈).

4. Colorants conformes à la revendication 2 et 3 dans lesquels R₁ représente un atome de chlore ou un groupe CF₃ et R₂ représente un groupe alkyle en C₁₋₈ non substitué ou un résidu de formule (2), R₃, R₄ et X ayant la signification indiquée pour la formule (2).

5. Colorants conformes à la revendication 4 dans lesquels R₁ représente un atome de chlore et R₂ un résidu de formule
(2) -R₃-O-R₄-X
R₃ et R₄ représentant indépendamment l'un de l'autre un groupe éthylène ou 1,3-propylène et X un groupe méthoxy, éthoxy ou phénoxy.

6. Procédé pour la préparation de colorants de formule (1) conforme à la revendication 1, caractérisé en ce que l'on procède à la diazotation d'une amine de formule 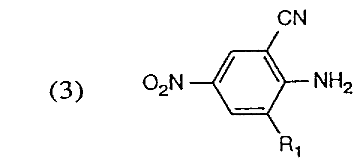 que l'on copule ensuite avec un copulant de formule 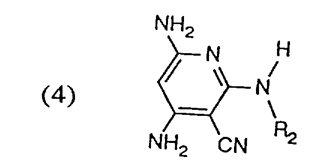 R₁ et R₂ ayant la signification indiquée pour la formule (1).

7. Utilisation de colorants de dispersion conformes à la revendication 1 pour la teinture ou l'impression de matériaux fibreux hydrophobes synthétiques ou semi-synthétiques, en particulier de matériaux textiles.

8. Procédé conforme à la revendication 7 pour la teinture ou l'impression de matériaux textiles en fibres de polyester.

9. Procédé pour la teinture ou l'impression de matériaux fibreux hydrophobes synthétiques ou semi-synthétiques, en particulier de matériaux textiles, caractérisé en ce que l'on applique ou incorpore un ou plusieurs des composés définis dans la revendication 1 sur ou dans le matériau cité.

10. Procédé conforme à la revendication 9, dans lequel le matériau fibreux hydrophobe, de préférence un matériau textile, est en fibres de polyester.

11. Matériau teint ou imprimé conformément à la revendication 9 ou 10.

## Revendications (Revendications pour l'(les) Etat(s) contractant(s) suivant(s): ES)

1. Procédé pour la préparation de colorants de formule 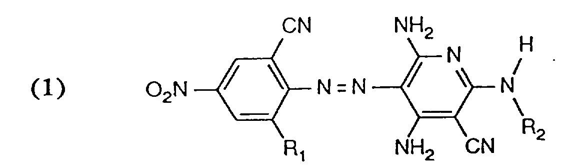 dans laquelle
R₁ représente un atome d'halogène ou un groupe CF₃ et
R₂ représente un groupe alkyle non substitué ou substitué par un groupe hydroxy, alcoxy, phénoxy, un atome d'halogène, un groupe cyano ou phényle, les groupes alkyle et phényle de ces substituants pouvant être non substitués ou porter des substituants hydroxy, alcoxy ou phénoxy, caractérisé en ce que l'on procède à la diazotation d'une amine de formule 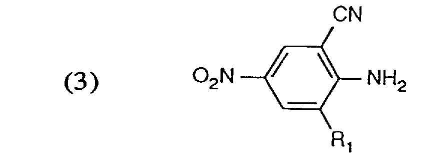 que l'on copule ensuite avec un copulant de formule 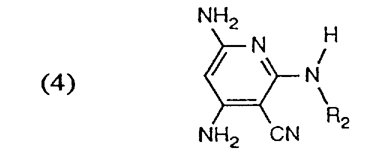 R₁ et R₂ ayant la signification indiquée pour la formule (1).

2. Procédé conforme à la revendication 1 où R₁ représente un atome de chlore ou un groupe CF₃.

3. Procédé conforme à une des revendications 1 et 2, dans lequel R₂ représente un groupe alkyle en C₁₋₈ non substitué ou un résidu de formule
(2) -R₃-O-R₄-X
dans laquelle
R₃ représente un groupe alkylène en C₂₋₄,
R₄ représente un groupe alkylène en C₂₋₈ et
X représente H, -OH, -O-phényle ou -O-(alkyle en C₁₋₈).

4. Procédé conforme à la revendication 2 et 3 dans lequel R₁ représente un atome de chlore ou un groupe CF₃ et R₂ représente un groupe alkyle en C₁₋₈ non substitué ou un résidu de formule (2), R₃, R₄ et X ayant la signification indiquée pour la formule (2).

5. Procédé conforme à la revendication 4 dans lesquels R1 représente un atome de chlore et R₂ un résidu de formule
-R₃-O-R₄-X
R₃ et R₄ représentant indépendamment l'un de l'autre un groupe éthylène ou 1,3-propylène et X un groupe méthoxy, éthoxy ou phénoxy.

6. Utilisation de colorants de dispersion conformes à la revendication 1 pour la teinture ou l'impression de matériaux fibreux hydrophobes synthétiques ou semi-synthétiques, en particulier de matériaux textiles.

7. Utilisation conforme à la revendication 6 pour la teinture ou l'impression de matériaux textiles en fibres de polyester.

8. Procédé pour la teinture ou l'impression de matériaux fibreux hydrophobes synthétiques ou semi-synthétiques, en particulier de matériaux textiles, caractérisé en ce que l'on applique ou incorpore un ou plusieurs des composés définis par la formule (1) dans la revendication 1 sur ou dans le matériau cité.

9. Procédé conforme à la revendication 8, dans lequel le matériau fibreux hydrophobe, de préférence un matériau textile, est en fibres de polyester.

10. Matériau teint ou imprimé conformément à la revendication 8 ou 9.
